# FASCICULE DE BREVET EUROPEEN

(11) **EP 2 734 478 B1**
(45) Date de publication et mention de la délivrance du brevet: **08.07.2015**
(21) Numéro de dépôt: 12758617.0
(22) Date de dépôt: 16.07.2012
(51) Int. Cl.: C03B 5/00, C03B 5/42, C04B 35/484, C04B 35/488, F27D 1/00, C03B 5/43

(54) **BLOC REFRACTAIRE ET FOUR DE FUSION DE VERRE**
FEUERFESTER BLOCK UND GLASSWANNENOFEN.
REFRACTORY BLOCK AND GLASS MELTING FURNACE

(30) Priorité: 22.07.2011 FR 1156706
(43) Date de publication de la demande: 28.05.2014
(73) Titulaire: Saint-Gobain Centre de Recherches et d'Etudes Européen, 92400 Courbevoie (FR)
(72) Inventeur: CABODI, Isabelle, F-84300 Cavaillon (FR); GAUBIL, Michel, F-30133 Les Angles (FR)
(74) Mandataire: Nony
(86) Numéro de dépôt international: PCT/IB2012/053633
(87) Numéro de publication internationale: WO 2013/014573

(56) Documents cités:
- EP-A1- 0 939 065
- EP-A1- 1 810 956
- US-A1- 2011 105 296

## Description

### Domaine technique

L'invention concerne un produit réfractaire fondu AZS (Alumine-Zircone-Silice).

### Etat de la technique

Parmi les produits réfractaires, on distingue les produits fondus, bien connus pour la construction des fours de fusion du verre, et les produits frittés.

A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas a priori utilisable telle quelle pour fabriquer un produit fondu, et réciproquement.

Les produits fondus, souvent appelés « électrofondus », sont obtenus par fusion d'un mélange de matières premières appropriées dans un four à arc électrique ou par toute autre technique adaptée à ces produits. Le bain de matière en fusion est ensuite coulé dans un moule, puis le produit obtenu subit un cycle de refroidissement contrôlé.

Parmi les produits fondus, les produits électrofondus AZS, c'est-à-dire comportant majoritairement de l'alumine (Al₂O₃), de la zircone (ZrO₂) et de la silice (SiO₂), sont connus depuis plusieurs dizaines d'années. Le brevet US-A-2 438 552 décrit un des premiers perfectionnements apportés à ce type de produit. Les auteurs préconisent l'ajout de Na₂O (1-2,2%) et MgO/CaO (0,2-0,8%) pour répondre à des problèmes de faisabilité concernant des produits comportant moins de 70% d'Al₂O₃, de 14 à 40% ZrO₂ et de 9 à 12% de SiO₂.

Les produits AZS commercialisés actuellement par Saint-Gobain SEFPRO, tels que l'ER-1681, l'ER-1685, ou l'ER-1711, contiennent de 45 à 50% d'Al₂O₃, de 32 à 41% de ZrO₂, de 12 à 16% de SiO₂ et environ 1% de Na₂O.

Les produits électrofondus à très forte teneur en zircone, c'est-à-dire comportant plus de 85% en masse de zircone (ZrO₂), sont réputés pour leur qualité de très grande résistance à la corrosion sans coloration du verre produit et sans génération de défauts.

Le produit ER-1195 produit et commercialisé par Saint-Gobain SEFPRO est aujourd'hui largement utilisé dans les fours de fusion du verre. Sa composition chimique comprend environ 94% de zircone, 4 à 5% de silice, environ 1% d'alumine, 0,3% d'oxyde de sodium et moins de 0,05% en masse de P₂O₅. Elle est typique des produits à très forte teneur en zircone utilisés pour les fours verriers.

Ces produits sont performants et conviennent bien pour la fabrication des fours de verrerie. Cependant, ils ne peuvent pas toujours être utilisés, notamment pour les blocs constituant les cuves ou les gorges des fours de verrerie. En effet, la face extérieure de ces blocs est refroidie et il existe donc une grande différence de température entre les faces intérieures extérieures des blocs du four. Il est alors important pour que le refroidissement soit efficace, que ces blocs présentent une conductivité thermique élevée. Par ailleurs, il existe un besoin permanent pour améliorer les conditions de conduite des fours de verrerie ainsi que la qualité du verre, notamment pour de nouvelles compositions de verre particulièrement sollicitantes.

En particulier, il est toujours utile d'améliorer la résistance à la corrosion par le verre en fusion.

Il existe donc un besoin pour un produit fondu présentant une très bonne résistance à la corrosion par le verre en fusion ainsi qu'une conductivité thermique élevée.

La présente invention vise à satisfaire ce besoin.

### Résumé de l'invention

Plus particulièrement, elle concerne un produit réfractaire fondu présentant la composition chimique moyenne suivante, en pourcentage en masse sur la base des oxydes et pour un total de 100% :
ZrO₂ : 60,0% - 80,0% ;
SiO₂ : 4,0% - 10,0% ;
Al₂O₃ : complément à 100% ;
Y₂O₃≤ 5,0% ;
Na₂O+K₂O+B₂O₃ ≥ 0,3% et SiO₂/(Na₂O+K₂O+B₂O₃) ≥ 5,0 ;
autres espèces oxydes : ≤ 2,0% ;
avec un rapport des teneurs massiques ZrO₂ / Al₂O₃ compris entre 2,0 et 6,0.

Comme on le verra plus en détail dans la suite de la description, un produit selon l'invention présente un excellent compromis entre la résistance à la corrosion et la conductivité thermique.

Un produit selon l'invention peut encore comporter une ou plusieurs des caractéristiques optionnelles suivantes :
- ZrO₂ ≥ 62,0%, voire ZrO₂ ≥ 63,0%, voire ZrO₂ ≥ 65,0%, et/ou ZrO₂ ≤ 75,0%, voire ZrO₂ ≤ 74,0%, voire ZrO₂ ≤ 72,0%, voire ZrO₂ ≤ 71,4%, voire ZrO₂ ≤ 70,0% ;
- SiO₂ ≥ 4,2%, voire SiO₂ ≥ 4,5%, voire SiO₂ ≥ 5,0%, et/ou SiO₂ ≤ 9,5%, voire SiO₂ ≤ 9,0%, voire SiO₂ ≤ 8,0%, voire SiO₂ ≤ 7,5% ;
- Al₂O₃ ≥ 12,0%, voire Al₂O₃ ≥ 14,0%, et/ou Al₂O₃ ≤ 35,0%, voire Al₂O₃ ≤ 32,0% ;
   - La teneur en Y₂O₃ est inférieure ou égale à 4,5%, voire inférieure ou égale à 4,0%, voire inférieure ou égale à 2,0%, voire inférieure à 1,0%, voire inférieure à 0,5%, voire inférieure à 0,1%, voire sensiblement nulle ;
- La teneur en Na₂O + K₂O + B₂O₃ est supérieure à 0,4%, voire supérieure à 0,5%, et/ou inférieure à 1,6%, inférieure à 1,5%, voire inférieure à 1,4%, voire inférieure à 1,2% ;
- La teneur en Na₂O est supérieure à 0,4%, voire supérieure à 0,5%, et/ou inférieure à 1,9%, inférieure à 1,8%, inférieure à 1,5%, voire inférieure à 1,2%, voire inférieure à 1,1% ;
- La teneur en K₂O est supérieure à 0,4%, voire supérieure à 0,5%, et/ou inférieure à 1,9%, inférieure à 1,8%, inférieure à 1,5%, voire inférieure à 1,2%, voire inférieure à 1,0%, voire inférieure à 0,7%, voire inférieure à 0,5%, voire inférieure à 0,3%, voire inférieure à 0,2% ;
- La teneur en B₂O₃ est supérieure à 0,4%, voire supérieure à 0,5%, et/ou inférieure à 1,9%, inférieure à 1,8%, inférieure à 1,5%, voire inférieure à 1,2%, voire inférieure à 1,0%, voire inférieure à 0,7%, voire inférieure à 0,5%. Dans un mode de réalisation, la teneur en B₂O₃ peut être également inférieure à 0,3%, voire inférieure à 0,2% ;
- Le rapport des teneurs massiques ZrO₂ / Al₂O₃ est supérieur à 2,5, voire supérieur à 3,0 ;
- Le rapport des teneurs massiques ZrO₂ / Al₂O₃ est inférieur à 5,5, voire inférieur à 5,0 ;
- Le rapport des teneurs massiques SiO₂ / Al₂O₃ est inférieur à 0,8, voire inférieur à 0,5, voire inférieur à 0,4, voire inférieur à 0,3;
- Le rapport des teneurs massiques SiO₂ / (Na₂O + K₂O + B₂O₃) est supérieur à 5,5, voire supérieur ou égal à 6,0, voire supérieur à 6,5, voire supérieur à 7,0, voire supérieur à 8,0;
- Le rapport des teneurs massiques SiO₂ / (Na₂O + K₂O + B₂O₃) est inférieur à 15,0, voire inférieur à 14,0, voire inférieur à 13,0, voire inférieur à 12,0, voire inférieur à 11,0;
- Le rapport des teneurs massiques SiO₂ / Na₂O est supérieur à 6,0, voire supérieur à 6,5, voire supérieur à 7,0, voire supérieur à 8,0 ;
- Le rapport des teneurs massiques SiO₂ / Na₂O est inférieur à 14,0, voire inférieur à 13,0, voire inférieur à 12,0, voire inférieur à 11,0 ;
- Les « autres espèces oxydes » sont des impuretés ;
- La teneur en « autres espèces oxydes » est inférieure ou égale à 1,5%, voire inférieure à 1,2%, voire inférieure à 1,0%, voire inférieure à 0,8% ;
- La teneur en CaO est inférieure à 0 ,5%, voire inférieure à 0,4% ;
- La teneur en MgO est inférieure à 0 ,5%, voire inférieure à 0,4% ;
- La teneur en SrO est inférieure à 0 ,5%, voire inférieure à 0,4% ;
- La teneur en BaO est inférieure à 0 ,5%, voire inférieure à 0,4% ;
- La composition chimique moyenne, en pourcentage en masse sur la base des oxydes et pour un total de 100%, est la suivante :
   ZrO₂ : 60,0% - 70,0% ; et
   SiO₂ : 4,0% - 9,0% ; et
   Al₂O₃ : 18,8% - 35,0%, et
   Na₂O : 0,4% - 1,2% avec SiO₂ / Na₂O compris entre 7,0 et 12,0 ; et
   autres espèces oxydes : ≤ 1,0% ;
- Le produit se présente sous la forme d'un bloc.

Dans un mode de réalisation, le produit selon l'invention comporte de l'oxyde d'yttrium. Il peut alors également présenter une ou plusieurs des caractéristiques optionnelles précédentes ainsi qu'une ou plusieurs des caractéristiques optionnelles suivantes :
- La teneur en Y₂O₃ est supérieure à 50/ZrO₂, voire supérieure à 60/ZrO₂, voire supérieure à 70/ZrO₂ ;
- La teneur en Y₂O₃ est supérieure ou égale à 1,2%, voire supérieure ou égale à 1,5%, voire supérieure ou égale à 2,0% ;
- Le rapport des teneurs massiques SiO₂ / (Na₂O + K₂O + B₂O₃) est supérieur à 5,5 x Y₂O₃, voire supérieur à 6,0 x Y₂O₃ ;
- Le rapport des teneurs massiques SiO₂ / Na₂O est supérieur à 5,5 x Y₂O₃, voire supérieur à 6,0 x Y₂O₃ ;
- La composition chimique moyenne, en pourcentage en masse sur la base des oxydes et pour un total de 100%, est la suivante :
   ZrO₂ : 60,0% - 70,0% ; et
   SiO₂ : 4,0% - 9,0% ; et
   Al₂O₃: 14,8% - 33,6% ; et
   Y₂O₃ : 2,0% - 4,0% ; et
   Na₂O : 0,4% - 1,2% et
   autres espèces oxydes : ≤ 1,0% ;
- La conductivité thermique, par exemple évaluée comme dans les exemples, est de préférence supérieure à 3,00 W/m.°C, de préférence supérieure à 3,05 W/m.°C, voire supérieure ou égale à 3,10 W/m.°C.

L'invention concerne aussi un procédé de fabrication d'un produit réfractaire selon l'invention, comprenant les étapes successives suivantes :
a) mélange de matières premières, de manière à former une charge de départ,
b) fusion de ladite charge de départ jusqu'à obtention d'un bain de matière en fusion,
c) coulage et solidification de ladite matière en fusion, par refroidissement contrôlé, de manière à obtenir un produit réfractaire fondu,
ce procédé étant remarquable en ce que lesdites matières premières sont choisies de manière que ledit produit réfractaire fondu présente une composition conforme à celle d'un produit selon l'invention.

L'invention concerne enfin un four de fusion de verre comportant un produit selon l'invention, notamment un produit fabriqué ou susceptible d'avoir été fabriqué par un procédé selon l'invention, en particulier dans une région du four dans laquelle le produit est susceptible d'entrer en contact avec du verre en fusion ou avec des gaz dégagés par la fusion du verre, et notamment en superstructure (voûte).

### Brève description des figures

D'autres objets, aspects, propriétés et avantages de la présente invention apparaîtront encore à la lumière de la description et des exemples qui suivent et à l'examen du dessin annexé dans lequel :
- la figure 1 présente une microstructure observée en microscopie optique de l'échantillon de l'exemple 5* après essai,
- les figures 2a et 2b présentent une microstructure observée en microscopie optique de l'échantillon de l'exemple 6 selon l'invention après essai, à deux grossissements différents,
- la figure 3 présente une microstructure observée en microscopie optique de l'échantillon de l'exemple 8* après essai.

### Définitions

De manière générale, on appelle « produit fondu », « produit fondu et coulé » ou « obtenu par fusion » un produit solide, éventuellement recuit, obtenu par solidification complète, par refroidissement, d'un bain de matière en fusion. Un « bain de matière en fusion » est une masse qui, pour conserver sa forme, doit être contenue dans un récipient. Un bain de matière en fusion, apparemment liquide, peut contenir des parties solides, mais en quantité insuffisante pour qu'elles puissent structurer ladite masse.

Un produit selon l'invention peut contenir de l'oxyde d'hafnium, HfO₂, naturellement présent dans les sources de zircone. Sa teneur massique dans le produit selon l'invention est inférieure ou égale à 5,0%, généralement inférieure ou égale à 2,0%. Par « ZrO₂ », on désigne classiquement la zircone et ces traces d'oxyde d'hafnium. HfO₂ n'est donc pas comptabilisé dans les "autres espèces oxydes", mais dans « ZrO₂ ».

Par « impuretés », on entend les constituants inévitables, introduits nécessairement avec les matières premières ou résultant de réactions avec ces constituants. En particulier, les oxydes de fer et de titane sont connus pour être néfastes et leur teneur doit être limitée à des traces introduites à titre d'impuretés avec les matières premières. De préférence, la quantité massique de Fe₂O₃ + TiO₂ est inférieure à 0,55%, voire inférieure à 0,20%.

Dans les formules comprenant un rapport (sans unité) entre des pourcentages massiques de constituants, par exemple SiO₂/(Na₂O+K₂O+B₂O₃) et une teneur (en pourcentage massique) en un autre constituant, par exemple 5 x Y₂O₃, la relation est purement mathématique afin de délimiter un domaine de compositions. Il en est de même pour les formules comprenant l'inverse d'une teneur (50/ZrO₂) et une teneur (Y₂O₃).

Sauf mention contraire, tous les pourcentages de la présente description sont des pourcentages massiques sur la base des oxydes.

### Description détaillée

Un produit selon l'invention peut être fabriqué suivant les étapes a) à c) décrites ci-dessous :
a) mélange de matières premières de manière à former une charge de départ,
b) fusion de ladite charge de départ jusqu'à obtention d'un bain de matière en fusion,
c) solidification dudit bain de matière en fusion, par refroidissement contrôlé de manière à obtenir un produit réfractaire selon l'invention.

A l'étape a), les matières premières sont déterminées de manière à garantir une composition, dans le produit fini, conforme à l'invention.

La présence d'oxyde d'yttrium peut être utile dans les produits de l'invention mais sa teneur ne doit pas dépasser 5,0% sinon la faisabilité est dégradée.

Une teneur en Y₂O₃ supérieure ou égale à 50/ZrO₂ peut être utile pour obtenir une bonne résistance à la corrosion par le verre en fusion, notamment au niveau du contact entre deux blocs de cuve adjacents. La présence d'oxyde d'yttrium permet d'abaisser la température de dilatation maximale avant changement de phase, de réduire la corrosion par le verre en fusion et d'augmenter la viscosité de ce verre à cette température. Ainsi, les risques de fuites de verre à l'interface de contact entre deux blocs de cuve adjacents sont diminués.

La présence d'oxyde de sodium et/ou de potassium et/ou de bore est nécessaire pour conférer à la phase vitreuse des propriétés physiques et chimiques adaptées. La teneur en Na₂O+K₂O+B₂O₃ ne doit cependant pas dépasser une valeur telle que SiO₂/(Na₂O+K₂O+B₂O₃) ≥ 6,0 sinon, aux températures de fonctionnement du four de fusion du verre, la phase vitreuse risque de s'écouler à la surface du produit qui perdrait ainsi sa cohésion et sa résistance à la corrosion. Dans un mode de réalisation, K₂O et/ou B₂O₃ ne sont présents qu'à titre d'impuretés.

La présence d'oxyde de calcium et de magnésium est néfaste dans les produits de l'invention car elle est susceptible de générer des cristaux d'aluminate de chaux dans la phase vitreuse. La présence de ces cristaux peut entraîner des défauts de fracturation du produit. Par ailleurs, une teneur trop importante en CaO et/ou MgO conduit à une dissolution des cristaux de zircone, ce qui diminue la résistance à la corrosion du produit. De préférence, la teneur en CaO et/ou en MgO ne dépasse pas 0,5%.

La présence d'oxyde de baryum ou de strontium n'est pas souhaitable. De préférence, BaO et/ou SrO ne sont présents qu'à titre d'impuretés. De préférence, la teneur en BaO et/ou en SrO ne dépasse pas 0,5%.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement, on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes.

A l'étape c), le bain de matière en fusion est de préférence coulé dans un moule adapté pour la fabrication d'un bloc. Le refroidissement est de préférence effectué à la vitesse d'environ 10°C par heure.

Tout procédé conventionnel de fabrication de produits fondus AZS destinés à des applications dans des fours de fusion de verre peut être mis en oeuvre, pourvu que la composition de la charge de départ permette d'obtenir des produits présentant une composition conforme à celle d'un produit selon l'invention.

Un produit selon l'invention peut constituer tout ou partie d'un bloc.

Le bloc peut notamment présenter une masse de plus de 10 kg, de plus de 20 kg, voire de plus de 50 kg, de plus de 150 kg, de plus de 300 kg, voire de plus de 900 kg et/ou de moins de 2 tonnes. En particulier, il peut présenter une masse d'environ 1 tonne.

La forme du bloc n'est pas limitative.

Le bloc peut présenter au moins une dimension (épaisseur, longueur, ou largeur) supérieure à 150 mm, de préférence supérieure à 200 mm, voire supérieure à 400 mm, voire supérieure à 600 mm, voire supérieure à 800 mm ou même supérieure à 1000 mm, voire encore supérieure à 1600 mm.

Dans un mode de réalisation avantageux, l'épaisseur, la longueur et la largeur du bloc sont supérieures à 150 mm, voire supérieures à 200 mm, voire supérieures à 300 mm, voire supérieures à 400 mm.

Un produit selon l'invention peut être également utilisé sous la forme d'un produit mince, c'est-à-dire présentant une épaisseur comprise entre de 50 à 150 mm, en particulier une épaisseur inférieure à 120 mm, voire inférieure à 100 mm. Il peut notamment se présenter sous la forme d'une dalle.

De préférence, le bloc ou la dalle fait partie ou constitue une paroi ou la sole d'un four, en particulier d'un four de fusion de verre.

### Exemples

Les exemples non limitatifs suivants sont donnés dans le but d'illustrer l'invention.

Dans ces exemples, on a employé les matières premières suivantes :
- la zircone CC10 vendue par la Société Européenne des Produits Réfractaires contenant principalement, en moyenne en masse, 98,5% de ZrO₂, 0,5% de SiO₂ et 0,2% de Na₂O,
- le sable de zircon à 33% de silice,
- l'alumine de type AC44 vendue par la société Pechiney et contenant en moyenne 99,4% d'Al₂O₃,
- le carbonate de sodium contenant 58,5% de Na₂O.

Les produits ont été préparés selon le procédé classique de fusion en four à arc, puis coulés pour obtenir des blocs de format 200x400x150 mm³.

L'analyse chimique des produits obtenus est donnée dans les tableaux 1 et 2 ; il s'agit d'une analyse chimique moyenne, donnée en pourcentage en masse. Les impuretés constituent le complément à 100%.

### Evaluation de la conductivité thermique selon le test dit « flash lampe » (Test A)

Des échantillons des blocs préparés sont prélevés sous la forme de pastilles d'une hauteur de 5 mm et d'un diamètre de 50 mm, puis sont soumis à une montée en température jusqu'à 1000°C durant laquelle on mesure la diffusivité thermique. La conductivité thermique est ensuite calculée elle est égale au produit de la diffusivité thermique, de la masse volumique mesurée, et de la chaleur spécifique. La conductivité thermique donnée dans les tableaux 1 et 2 correspond à des mesures à 800°C.

### Evaluation de la résistance à la corrosion (Test B)

Des échantillons des blocs préparés sont prélevés sous la forme de cylindres d'une longueur de 100 mm et d'un diamètre de 20 mm. Ces échantillons sont maintenus immergés et en rotation dans un bain de verre en fusion pendant 200 heures à une température de 1450°C dans un verre de type sodocalcique pour les exemples du tableau 1 ; pendant 100 heures à une température de 1550°C dans un verre sodocalcique pour les exemples du tableau 2 ; et pendant 100 heures à une température de 1550°C dans un verre de type borosilicate pour les exemples du tableau 3. La vitesse de rotation autour de l'axe du porte-échantillon était de 1 tour par minute (soit, en vitesse linéaire, 0,5 cm/s). On mesure ensuite, pour chaque échantillon, le volume restant de l'échantillon puis, par différence avec le volume initial de l'échantillon, le volume perdu pendant le test.

Le rapport du volume perdu par corrosion de l'échantillon du produit de référence (exemple 1 pour le tableau 1*, exemple 5* pour le tableau 2, exemple 9* pour le tableau 3) au volume perdu par corrosion d'un échantillon testé, multiplié par 100, donne une évaluation de la résistance à la corrosion par le verre de l'échantillon testé par rapport à celle du produit de référence. « Ic » désigne l'indice de corrosion, ainsi défini.

On mesure Ic pour différentes zones de l'échantillon. L'échantillon se décompose en 3 zones :
- une première zone Z1 de 35 mm de long à partir du haut de l'échantillon : cette première zone est maintenue dans le porte-échantillon et n'est pas soumise à la corrosion ;
- une deuxième zone Z-cds de 25 mm de long en-dessous de Z1, qui correspond à la partie située autour du coup de sabre ;
- une dernière zone Z-Im qui correspond au reste de l'échantillon.

« Ic-Im » donne l'indice de corrosion de la zone Z-Im, qui correspond donc à la partie immergée de l'échantillon, c'est-à-dire à la partie en contact uniquement avec du verre en fusion. Il illustre la résistance à la corrosion des parties totalement en contact avec le verre, par exemple la sole ou la gorge des fours de verrerie.

« Ic-cds » donne l'indice de corrosion de la zone Z-cds, qui correspond donc à la partie située autour du coup de sabre, c'est-à-dire à la zone située autour de la ligne de flottaison (niveau du bain de verre en fusion) qui est en contact à la fois avec le verre en fusion et avec l'atmosphère. Il illustre la résistance à la corrosion des parties susceptibles de voir un point triple « produit réfractaire - verre - atmosphère », par exemple la cuve ou toute partie dans laquelle des défauts génèrent des bulles de gaz, notamment la gorge des fours de verrerie.

**Tableau 1**

| Ex. | ZrO₂ | Al₂O₃ | SiO₂ | Na₂O⁺ K₂O +B₂O₃ | ZrO₂ / Al₂O₃ | SiO₂ / (Na₂O + K₂O +B₂O₃) | Test A (W/m.°C) | Ic-Im | Ic-cds |
|---|---|---|---|---|---|---|---|---|---|
| | | | | | | | | (200 h -1450°C) | |
| 1* | 53,0 | 35,0 | 9,2 | 1,0 | 1,5 | 9,2 | 3,19 | 100 | 100 |
| 2 | 64,5 | 26,0 | 7,0 | 1,0 | 2,5 | 7,0 | 3,10 | 117 | 125 |
| 3 | 66,2 | 27,5 | 4,9 | 0,6 | 2,4 | 8,7 | ND | 112 | 147 |
| 4* | 94,0 | 0,88 | 2,0 | 0,3 | 106,8 | 6,7 | ND | 106 | 118 |

**Tableau 2**

| Ex. | ZrO₂ | Al₂O₃ | SiO₂ | Na₂O + K₂O +B₂O₃ | ZrO₂ / Al₂O₃ | SiO₂ / (Na₂O + K₂O +B₂O₃) | Test A (W/m.°C) | Ic-Im | Ic-cds |
|---|---|---|---|---|---|---|---|---|---|
| | | | | | | | | (100 h - 1550°C) | |
| 5* | 41,4 | 45,4 | 10,7 | 1,0 | 0,9 | 10,7 | 3,22 | 100 | 100 |
| 6 | 68,6 | 26,0 | 4,5 | 0,6 | 2,6 | 7,5 | 3,11 | 208 | 183 |
| 7 | 76,2 | 16,1 | 6,8 | 0,8 | 4,7 | 8,5 | 3,04 | 194 | 196 |
| 8* | 94,0 | 1,2 | 2,2 | 0,3 | 78,3 | 7,3 | 2,92 | 205 | 209 |

**Tableau 3**

| Ex. | ZrO₂ | Al₂O₃ | SiO₂ | Na₂O + K₂O +B₂O₃ | ZrO₂/ Al₂O₃ | SiO₂ / (Na₂O + K₂O +B₂O₃) | Test A (W/m.°C) | Ic-Im | Ic-cds |
|---|---|---|---|---|---|---|---|---|---|
| | | | | | | | | (100 h - 1550°C) | |
| 9* | 41,4 | 45,4 | 10,6 | 1,0 | 0,9 | 10,6 | 3,20 | 100 | 100 |
| 10 | 66,6 | 25,1 | 5,7 | 1,0 | 2,7 | 5,7 | ND | 152 | 204 |
| 11 | 71,6 | 20,7 | 6,6 | 1,0 | 3,5 | 6,6 | ND | 139 | 278 |
| 12* | 96,0 | 0,9 | 2,1 | 0,3 | 109 | 7,0 | 2,93 | 134 | 350 |

| | | | | | | | | | |
|---|---|---|---|---|---|---|---|---|---|
| * produit hors invention ; ND : Non Déterminé | | | | | | | | | |

Alors que la résistance à la corrosion est habituellement liée à la teneur en zircone, on constate que les exemples de l'invention permettent d'atteindre une résistance à la corrosion améliorée par rapport au produit de référence et au même niveau, même améliorée par rapport à des produits à teneurs en zircone significativement supérieures.

Les exemples de l'invention permettent également d'atteindre une conductivité thermique bien supérieure que celle des produits à très haute teneur en zircone.

Les produits de l'invention présentent donc un excellent compromis entre la résistance à la corrosion et la conductivité thermique, permettant d'atteindre des durées de vie significativement améliorées grâce à une plus grande stabilité de l'interface verre en fusion/ produit réfractaire.

Pour mieux comprendre les performances remarquables vis-à-vis de la corrosion, l'interface entre les produits réfractaires et le verre a été étudiée.

Des échantillons des blocs préparés sont prélevés sous la forme d'auto-creusets : cylindres creux d'une longueur totale de 50 mm, creusée sur 30 mm et de diamètre extérieur de 50 mm et intérieur de 30 mm. Ces échantillons sont remplis, sur une hauteur de 20 mm, de verre de type sodocalcique maintenu en fusion pendant 10 heures à une température de 1450°C. On mesure ensuite, pour chaque échantillon, les teneurs en zircone et en alumine du verre, à l'interface (V0) entre le produit réfractaire et le verre, ainsi qu'à 200 µm de cette interface (V200). On compare ces analyses aux teneurs en zircone et alumine du verre avant l'essai (V). Les résultats sont reportés dans le tableau 4. On calcule ensuite, à partir de modèles basées sur des mesures, la densité (d) du verre à 1400°C ainsi que la viscosité (µ).

**Tableau 4**

| | V | | | | V0 | | | | V200 | | | |
|---|---|---|---|---|---|---|---|---|---|---|---|---|
| | ZrO₂ | Al₂O₃ | d | log(µ) (Pa.s) | ZrO₂ | Al₂O₃ | d | log(µ) (Pa.s) | ZrO₂ | Al₂O₃ | d | log (µ) (Pa.s) |
| 5* | 0 | 1 | 2,31 | 0,98 | 2,0 | 30,1 | 2,41 | 4,30 | 1,7 | 23,4 | 2,38 | 3,66 |
| 6 | 0 | 1 | 2,31 | 0,98 | 2,2 | 25,6 | 2,39 | 4,13 | 1,3 | 12,8 | 2,35 | 3,22 |
| 8* | 0 | 1 | 2,31 | 0,98 | 15,0 | 6,0 | 2,57 | 1,43 | ND | ND | ND | ND |

On observe pour l'exemple 6 que:
∘ la teneur en zircone à l'interface est bien moindre que pour l'exemple 8* ; l'augmentation de densité est donc significativement limitée ce qui limite le renouvellement du verre à l'interface par gravité,
∘ le verre à l'interface présente une viscosité proche de celle de l'exemple 5*, ce qui favorise la stabilité d'interface car une viscosité élevée empêche le renouvellement de l'interface dû notamment à la vitesse du verre, et
∘ la teneur en alumine à l'interface est moins élevée que pour l'exemple 5*, ce qui est favorable pour limiter l'effet Marangoni : l'enrichissement du verre en alumine fait augmenter la tension de surface et favorise la convection naturelle du verre due aux écarts de tension de surface.

Tous ces éléments conduisent à une certaine stabilité de l'interface entre le produit réfractaire et le verre en fusion et donc à limiter la corrosion du produit réfractaire.

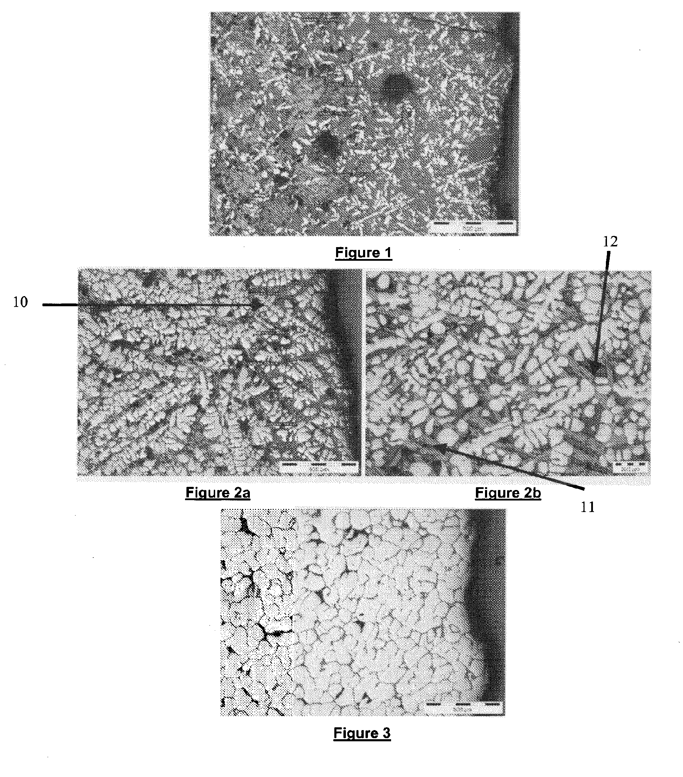

L'observation des auto-creusets après essai au microscope optique, illustrée sur les figures 1 à 3, montre que les produits de l'invention présentent une microstructure remarquable. En effet, les produits de l'invention, par exemple de l"exemple 6 dont une microstructure est présentée figure 2, ont l'avantage de présenter des cristaux de zircone dendritique 10 ainsi que des cristaux de corindon 11 et d'eutectique corindon-zircone allongés 12, induisant une microstructure fortement imbriquée qui participe à la stabilité d'interface avec le verre en apportant une meilleure résistance aux mouvements de convection en surface et donc une meilleure résistance à la corrosion par le verre.

Sans être liés par une théorie, les inventeurs pensent que lorsque la teneur en alumine est telle que ZrO₂ / Al₂O₃ est inférieur à 2,0, la solubilité du produit réfractaire est élevée, ce qui nuit à la résistance à la corrosion. En outre, cette solubilité conduit à la génération de défauts dans le verre en fusion, et en particulier à des variations locales de densité.

Les inventeurs considèrent également que lorsque le rapport ZrO₂ / Al₂O₃ est supérieur à 6,0, la teneur en alumine est trop faible pour passiver la zircone, ce qui nuit également à la résistance à la corrosion.

Bien entendu, la présente invention n'est pas limitée aux modes de réalisation décrits fournis à titre d'exemples illustratifs et non limitatifs.

En particulier, les produits selon l'invention ne se limitent pas à des formes ou de dimensions particulières, ni à l'application à des fours de verrerie.

## Revendications

1. Produit réfractaire fondu présentant la composition chimique moyenne suivante, en pourcentage en masse sur la base des oxydes et pour un total de 100% :
ZrO₂ : 60,0% - 80,0% ;
SiO₂ : 4,0% - 10,0% ;
Al₂O₃ : complément à 100% ;
Y₂O₃ ≤ 5,0% ;
Na₂O+K₂O+B₂O₃ ≥ 0,3% et SiO₂/(Na₂O+K₂O+B₂O₃) ≥ 5,0 ;
autres espèces oxydes : ≤ 2,0 % ;
le rapport des teneurs massiques ZrO₂ / Al₂O₃ étant compris entre 2,0 et 6,0.

2. Produit selon la revendication précédente, dans lequel
ZrO₂ ≤ 75,0 %, et
SiO₂/(Na₂O+K₂O+B₂O₃) ≥ 6,0 , et
autres espèces oxydes: ≤ 1,5 %.

3. Produit selon l'une quelconque des revendications précédentes, dans lequel
ZrO₂ : 62,0% - 75,0%, et/ou
2,5 < ZrO₂ / Al₂O₃ < 5,5, et/ou
SiO₂ : 4,2% - 9,5%, et/ou
Na₂O + K₂O + B₂O₃ > 0,4% et SiO₂/(Na₂O+K₂O+B₂O₃) ≥ 6,5.

4. Produit selon l'une quelconque des revendications précédentes, dans lequel
ZrO₂ : 65,0% - 72,0%, et/ou
3,0 < ZrO₂ / Al₂O₃ < 5,0, et/ou
SiO₂ : 4,5% - 9,0%, et/ou
Na₂O + K₂O + B₂O₃ > 0,5% et SiO₂/(Na₂O+K₂O+B₂O₃) ≥ 7,0.

5. Produit selon l'une quelconque des revendications précédentes, dans lequel
ZrO₂ ≤ 70,0%, et/ou
SiO₂ : 5,0% - 8,0%, et/ou
SiO₂/(Na₂O+K₂O+B₂O₃) ≥ 8,0.

6. Produit selon l'une quelconque des revendications précédentes, dans lequel la teneur en B₂O₃ est supérieure à 0,4%.

7. Produit selon l'une quelconque des revendications précédentes, dans lequel le rapport des teneurs massiques SiO₂ / Al₂O₃ est inférieur à 0,8.

8. Produit selon la revendication précédente, dans lequel le rapport des teneurs massiques SiO₂ / Al₂O₃ est inférieur à 0,4.

9. Produit selon l'une quelconque des revendications précédentes, dans lequel la teneur en Y₂O₃ est supérieure à 50/ZrO₂.

10. Produit selon l'une quelconque des revendications précédentes, dans lequel le rapport des teneurs massiques SiO₂ / (Na₂O + K₂O + B₂O₃) est supérieur à 5,5 x Y₂O₃.

11. Produit selon l'une quelconque des revendications précédentes, dans lequel la composition chimique moyenne, en pourcentage en masse sur la base des oxydes et pour un total de 100%, est la suivante :
ZrO₂ : 60,0% - 70,0% ; et
SiO₂ : 4,0% - 9,0% ; et
Al₂O₃ : 18,8% - 35,0% ; et
Na₂O : 0,4% - 1,2% avec SiO₂ / Na₂O compris entre 7,0 et 12,0, et
autres espèces oxydes : ≤ 1,0%.

12. Produit selon l'une quelconque des revendications 1 à 10, dans lequel la composition chimique moyenne, en pourcentage en masse sur la base des oxydes et pour un total de 100%, est la suivante :
ZrO₂ : 60,0% - 70,0% ; et
SiO₂ : 4,0% - 9,0% ; et
Al₂O₃: 14,8% - 33,6% ; et
Y₂O₃ : 2,0% - 4,0% ; et
Na₂O : 0,4% - 1,2% ; et
autres espèces oxydes : ≤ 1,0%.

13. Produit selon l'une quelconque des revendications précédentes, se présentant sous la forme d'un bloc.

14. Four de fusion de verre comportant un produit selon l'une quelconque des revendications précédentes, en particulier dans une région du four dans laquelle le produit est susceptible d'entrer en contact avec du verre en fusion ou avec des gaz dégagés par la fusion du verre, et notamment en superstructure.

## Patentansprüche

1. Geschmolzenes Feuerfestprodukt, welches die mittlere chemische Zusammensetzung in Massenprozenten auf der Basis von Oxiden und für eine Gesamtheit von 100% in folgender Weise darstellt:
ZrO₂ : 60,0% - 80,0%;
SiO₂: 4,0% - 10,0%;
Al₂O₃ : vervollständigend zu 100%;
Y₂O₃≤ 5,0%;
Na₂O+K₂O+B₂O₃≥0,3% und SiO₂/(Na₂O+K₂O+B₂O₃)≥5,0;
andere Oxidarten: ≤2,0%;
wobei das Verhältnis der Massengehalte ZrO₂/Al₂O₃ zwischen 2,0 und 6,0 liegt.

2. Produkt nach dem vorhergehenden Anspruch, in welchem
ZrO₂≤ 75,0%, und
SiO₂/(Na₂O+K₂O+B₂O₃) ≥ 6,0, und
andere Oxidarten: ≤ 1,5%.

3. Produkt nach einem der vorhergehenden Ansprüche, in welchem
ZrO₂: 62,0% - 75,0%, und/oder
2,5 < ZrO₂/Al₂O₃ < 5,5, und/oder
SiO₂: 4,2% - 9,5%, und/oder
Na₂O+K₂O+B₂O₃ > 0,4% und SiO₂/(Na₂O+K₂O+B₂O₃) ≥ 6,5.

4. Produkt nach einem der vorhergehenden Ansprüche, in welchem
ZrO₂: 65,0% - 72,0%, und/oder
3,0 < ZrO₂/Al₂O₃ < 5,0, und/oder
SiO₂: 4,5% - 9,0%, und/oder
Na₂O+K₂O+B₂O₃ > 0,5% und SiO₂/(Na₂O+K₂O+B₂O₃) ≥ 7,0.

5. Produkt nach einem der vorhergehenden Ansprüche, in welchem
ZrO₂ ≤ 70,0% und/oder
SiO₂: 5,0% - 8,0%, und/oder
SiO₂/(Na₂O+K₂O+B₂O₃) ≥ 8,0.

6. Produkt nach einem der vorhergehenden Ansprüche, in dem der Gehalt an B₂O₃ größer als 0,4% ist.

7. Produkt nach einem der vorhergehenden Ansprüche, in welchem das Verhältnis der Massengehalte SiO₂/Al₂O₃ kleiner als 0,8 ist.

8. Produkt nach dem vorhergehenden Anspruch, in welchem das Verhältnis der Massengehalte SiO₂/Al₂O3 kleiner als 0,4 ist.

9. Produkt nach einem der vorhergehenden Ansprüche, in welchem der Gehalt an Y₂O₃ größer als 50/ZrO₂ ist.

10. Produkt nach einem der vorhergehenden Ansprüche, in welchem das Verhältnis der Massengehalte SiO₂/(Na₂O+K₂O+B₂O₃) größer als 5,5 x Y₂O₃ ist.

11. Produkt nach einem der vorhergehenden Ansprüche, in welchem die mittlere chemische Zusammensetzung in Massenprozenten auf der Basis von Oxiden und für eine Gesamtheit von 100% folgendermaßen ist:
ZrO₂: 60,0% - 70,0%; und
SiO₂: 4,0% - 9,0%; und
Al₂O₃: 18,8% - 35,0%; und
Na₂O: 0,4% - 1,2% mit SiO₂/Na₂O zwischen 7,0 und 12,0 liegend und
andere Oxidarten: ≤ 1,0%.

12. Produkt nach einem der Ansprüche 1 bis 10, in welchem die mittlere chemische Zusammensetzung in Massenprozenten auf der Basis von Oxiden und für eine Gesamtheit von 100% folgendermaßen ist:
ZrO₂: 60,0% - 70,0%; und
SiO₂: 4,0% - 9,0%; und
Al₂O₃: 14,8% - 33,6%; und
Y₂O₃: 2,0% - 4,0%; und
Na₂O: 0,4% - 1,2%; und
andere Oxidarten: ≤ 1,0%.

13. Produkt nach einem der vorhergehenden Ansprüche, wobei es in der Form eines Blocks ausgebildet ist.

14. Glasschmelzofen, welcher ein Produkt nach einem der vorhergehenden Ansprüche aufweist, insbesondere in einem Ofenbereich, in welchem das Produkt geeignet ist, in Kontakt mit dem schmelzenden Glas zu gelangen oder mit durch das Schmelzen des Glases frei werdenden Gase, und vor allem als Überbau.

## Claims

1. A fused refractory product having the following average chemical composition, in percentage by weight based on the oxides and for a total of 100%:
ZrO₂: 60.0%-80.0%,
SiO₂: 4.0%-10.0%;
Al₂O₃: complement to 100%;
Y₂O₃ ≤ 5.0%;
Na₂O+K₂O+B₂O₃ ≥ 0.3% and SiO2/(Na₂O+K₂O+B₂O₃) ≥ 5.0;
other oxide species: ≤ 2.0%; and
the ratio of the contents by weight ZrO₂ / Al₂O₃ being between 2.0 and 6.0.

2. The product as claimed in any preceding claims, in which
ZrO₂ ≤ 75.0%, and
SiO₂/(Na₂O+K₂O+B₂O₃) ≥ 6.0, and
other oxide species: ≤ 1.5%.

3. The product as claimed in any preceding claims, in which
ZrO₂: 62.0%-75.0%, and/or
2.5 < ZrO₂ / Al₂O₃ < 5.5, and/or
SiO₂: 4.2%-9.5%, and/or
Na₂O + K₂O + B₂O₃ > 0.4% and SiO₂/(Na₂O+K₂O+B₂O₃) ≥ 6.5.

4. The product as claimed in any preceding claims, in which
ZrO₂: 65.0%-72.0%, and/or
3.0 < ZrO₂ / Al₂O₃ < 5.0, and/or
SiO₂: 4.5%-9.0%, and/or
Na₂O + K₂O + B₂O₃ > 0.5% and SiO₂/(Na₂O+K₂O+B₂O₃) ≥ 7.0.

5. The product as claimed in any preceding claims, in which
ZrO₂ ≤ 70.0%, and/or
SiO₂: 5.0%-8.0%, and/or
SiO₂/(Na₂O+K₂O+B₂O₃) ≥ 8.0.

6. The product as claimed in any preceding claims, in which the content of B₂O₃ is greater than 0.4%.

7. The product as claimed in any preceding claims, in which the ratio of the contents by weight SiO₂ / Al₂O₃ is less than 0.8.

8. The product as claimed in the preceding claim, in which the ratio of the contents by weight SiO₂ / Al₂O₃ is less than 0.4.

9. The product as claimed in any preceding claims, in which the content of Y₂O₃ is greater than 50/ZrO₂.

10. The product as claimed in any preceding claims, in which the ratio of the contents by weight SiO₂ / (Na₂O + K₂O + B₂O₃) is greater than 5.5 x Y₂O₃.

11. The product as claimed in any preceding claims, in which the average chemical composition, in percentage by weight based on the oxides and for a total of 100%, is as follows:
ZrO₂: 60.0%-70.0%; and
SiO₂: 4.0%-9.0%; and
Al₂O₃: 18.8%-35.0%; and
Na₂O: 0.4%-1.2% with SiO₂ / Na₂O between 7.0 and 12.0, and
other oxide species: ≤ 1.0%.

12. The product as claimed in any one of claims 1 to 10, in which the average chemical composition, in percentage by weight based on the oxides and for a total of 100%, is as follows:
ZrO₂: 60.0%-70.0%; and
SiO₂: 4.0%-9.0%; and
Al₂O₃: 14.8%-33.6%; and
Y₂O₃: 2.0%-4.0%; and
Na₂O: 0.4%-1.2%; and
other oxide species: ≤ 1.0%.

13. The product as claimed in any preceding claims, being in the form of a block.

14. A glass-melting furnace comprising the product as claimed in any preceding claims, in a region of the furnace in which the product may tend to come into contact with molten glass or with gases released by the melting of the glass, and notably in the superstructure.
